# EUROPEAN PATENT SPECIFICATION

(11) **EP 1 524 831 B1**
(45) Date of publication and mention of the grant of the patent: **30.11.2011**
(21) Application number: 04104959.4
(22) Date of filing: 11.10.2004
(51) Int. Cl.: H04M 3/436, H04M 3/487, H04M 3/42

(54) **Subscriber communication capability**
Teilnehmerkommunikationsfähigkeit
Capacité de communication d'abonné

(30) Priority: 17.10.2003 FI 20031527
(43) Date of publication of application: 20.04.2005
(73) Proprietor: TeliaSonera AB, 10663 Stockholm (SE)
(72) Inventor: Jokela, Harri, 00350 Helsinki (FI)
(74) Representative: Äkräs, Tapio Juhani

(56) References cited:
- US-A- 5 668 853
- US-A1- 2002 085 698
- US-A1- 2003 138 087

## Description

### FIELD OF THE INVENTION

The invention relates to communication via a telecommunication network and particularly to advance assessment of a subscriber's communication capability in a telecommunication system.

### BACKGROUND OF THE INVENTION

The emphasis in telecommunication is increasingly on mobile communication systems. A mobile communication system generally refers to any telecommunication system enabling communication while users move within the service area of the system. The most important service of a mobile communication system is indeed the ability of a subscriber to make or receive a call wherever the subscriber is located within the service area of the system. With improved reachability, services have also been developed with which the subscriber is able to control his reachability. Examples of such services include forwarding all incoming calls to voicemail, call forwarding to voicemail when the terminal is occupied or call forward routing. However, a problem in these arrangements is for instance that the caller is not able to conclude why the call was forwarded to voicemail. To improve reachability, what is known as a call waiting service has been developed, for example, wherein a voice message is used when the subscriber's terminal is engaged to inform the caller that the called party is engaged in a call at that particular time and to request the caller to wait for a while. At the same time, the called party hears a call waiting sound and knows that someone is calling him. Although this service informs the caller that the call was not answered because the terminal was engaged, other calls forwarded to voicemail or unanswered calls remain, however, without explanation.

Services have also been developed for the reachability problem caused by Internet surfing via a subscription. Reference EP 1 324 580 discloses a solution, wherein a check is made when the called subscriber's line is engaged in an Internet session to find out if the user prefers to remain undisturbed while the line is occupied and, if the user prefers to remain undisturbed, the caller is played a predetermined voice message, e.g. 'subscriber B is logged on to the Internet'. Although this solution does inform the caller in the same way as a call waiting service does that the call was forwarded to voicemail because of an Internet session or because the call was not answered, calls forwarded to voicemail or unanswered calls remain, however, without explanation. Moreover, this solution is subject to the receiver being connectible to the Internet.

A solution is provided by a mobile communication system presence service, wherein subscribers may receive information about the presence of other subscribers, for example, based on which they are able to conclude themselves if the second party is likely to be capable of answering a call or if he easily detects a transmitted (and delivered) message, for example. However, such a service is subject to the subscriber's mobile station having an application supporting this very service and to the caller/transmitter of the message being able to conclude the capability, i.e. communication capability prior to the call/the transmission of the message.

US 2003/0138087 discloses how to facilitate setting voice mail messages having different contents and time definitions. US 2003/0138087 teaches that a voice message to be played is set in a terminal by a user utilizing present statements shown to the user via display in the terminal, when a call forwarding service is taken into use.

### BRIEF DESCRIPTION OF THE DESCRIPTION

The object of the invention is thus to provide a method and an apparatus for implementing the method so as to solve the above problems. The object of the invention is achieved by a method, system, and server component, which are characterized by what is stated in the independent claims. Preferred embodiments of the invention are described in the dependent claims.

The invention is based on detecting problems and solving them by means of the value of an attribute maintained subscriber-specifically in a system, the value indicating to the system whether or not the subscriber is likely to be capable of communication. Herein, communication covers both communication modes requiring connection establishment, such as calls and various sessions, and connectionless modes, such as the transmission of different messages.

In a preferred embodiment of the invention, the attribute indicates the subscriber's communication capability when the subscriber line is not engaged, allowing the attribute to be used for advance assessment of the subscriber's communication capability. This allows subscriber A to provide for the fact that he will not reach subscriber B immediately, for example.

### BRIEF DESCRIPTION OF THE FIGURES

In the following, the invention will be described in more detail in connection with preferred embodiments with reference to the accompanying drawing, in which
Figure 1 is a simplified block diagram of system architecture;
Figure 2 is a flow diagram describing the operation of a first exemplary embodiment of the invention;
Figure 3 is a flow diagram describing the operation of a second exemplary embodiment of the invention; and
Figure 4 is a flow diagram describing the operation of a third exemplary embodiment of the invention.

### DETAILED DESCRIPTION OF THE INVENTION

The present invention is applicable to any telecommunication system. Such systems include for instance systems wherein the wireless local area network is connected to a wide area network, such as a public mobile telephone network. The wireless local area network may be for instance IEEE 802.11 or a HIPERLAN type of network employing either a radio interface, such as for instance Bluetooth, infrared, or another corresponding wireless access technique as the bearer at the air interface. For example, the wide area network may be based on so-called third generation mobile communication systems, such as UMTS (Universal Mobile Communications System), and systems based thereon, such as IMS (IP multimedia subsystem), future generation, such as the fourth generation, mobile communication systems, and the GSM system (Global System for Mobile Communications) and mobile communication systems corresponding thereto, such as GSM 1800 and PCS (Personal Communication System), and systems based on the aforementioned systems, such as GSM 2+ systems. The services of the GSM 2+ phase include for instance GPRS (General Packet Radio Service) and CAMEL (Customised Applications for Mobile Network Enhanced Logic). The invention is also applicable in the utilization of some other wireless system, a fixed system, a mere mobile communication system or a combination of several systems, wherein for instance one of the systems may be based on a fixed system and the rest on a wireless system. The invention is extremely well applicable to systems providing an interface to external systems or services: presence, positioning and/or calendar systems, for example.

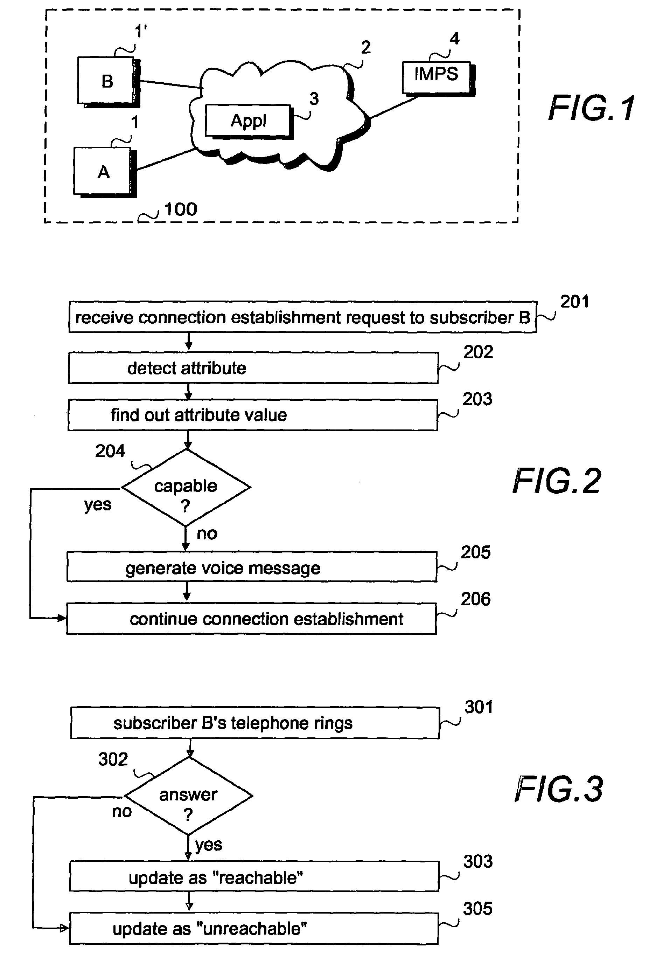

Figure 1 shows simplified network architecture of a first preferred embodiment of the invention describing only part of the elements of a system 100. The elements shown in Figure 1 are logical units whose implementation may differ from what is shown. It is evident to a person skilled in the art that the system may also comprise other functions and structures that need not be described in more detail herein. The system description is not in any manner binding, only suggestive.

The exemplary system of Figure 1 comprises subscribers and user devices 1, 1', a core network 2, and a server 4. In the present context, a user device 1, 1' refers generally to a whole constituted by a subscriber (subscription) and an actual terminal. The terminal may be any terminal capable of communicating in the system 100 or a combination of several devices. The terminal may be a portable computer or a mobile telephone, for example. The subscribers are distinguished from each other by symbols A and B. Subscriber A 1 refers to a subscriber requesting a connection, such as a caller or a transmitter of a message. Subscriber B 1', in turn, is the called party or the receiver of the message.

Herein, the core network 2 represents any data transmission network or a whole constituted by several, possibly different networks, which is capable of establishing a connection and/or switching messages between subscribers A and B. The core network 2 comprises a network node 3 controlling message delivery and/or connection establishment. The network node may be for instance an MSC (Mobile Switching Centre) of the GSM system, a CSCF (Call State Control Function) of the IMS system, a message centre delivering multimedia messages or some other network node comprising a corresponding functionality. Herein, a network node represents a communication system, such as a connection establishment system or a message delivery system. The manner of implementing the core network and the type of the network node or if functionalities are placed as different server components or applications in one or more network nodes, are not relevant to the invention.

In this example, the server 4 is a presence server, such as IMPS (Instant Messaging and Presence Services). It is an example of servers that may comprise different status information about a subscriber. Other corresponding servers include a location information server and a calendar server. The home location register and the visitor location register may also comprise status information about a subscriber. Different servers may also communicate with each other or be located physically in the same server as separate server components.

For the network node according to the invention, preferably one or more triggers are specified for detecting that an attribute or a set of attributes and conditions is associated with the communication, whereby the network node finds out the subscriber-specific value of the corresponding attribute. The trigger itself may also be an attribute. Examples of triggers include: subscriber A is a subscriber to a service according to the invention, subscriber B is a subscriber to a service according to the invention, the subscriber line of subscriber B is not occupied, subscriber B is a subscriber to a presence service and/or calendar service. Different triggers may be specified very freely. Attributes may be specified network node-specifically, service-specifically and/or subscriber-specifically. An example of a network node-specific attribute is that, in a network node switching calls, the attribute is 'a meeting', and in a network node switching messages, 'message sound'. An example of a service-specific attribute is a given event type of a calendar service. Corresponding attributes can also be specified subscriber-specifically, if need be, even subscriber profile-specifically when two or more usage profiles are specified for the subscriber, one of which is typically active. The attribute may also be for instance a piece of information in the subscriber information, indicating if the previous call was answered or not. Other specifications can also be associated with the attributes, such as for instance routing instructions, such as for instance an instruction: all calls are connected directly to voicemail when the telephone is mute or if the calendar contains a given event type at that very moment. The invention does in no way restrict the specification of the attributes or any conditions associated therewith nor the location where the values of an attribute and the attribute specifications are maintained. The values of the above mentioned attributes are preferably maintained in different servers or one server of the system. The values of the different attributes may be located in different servers and still be used together, as is evident in the examples. The value of an attribute may even be in the terminal of subscriber B, for instance in the settings of the active usage profile, in which case the system has to retrieve it from there.

An example of the attributes and the values thereof (and sets of attributes) is that if subscriber B has a presence service, the value of a given attribute, e.g. 'a meeting', is checked in the subscriber information of subscriber B. Alternatively, the value of more attributes can be checked and in case one of them indicates that subscriber B is unlikely to be capable of answering the call and/or detecting a short message, for example, subscriber B is interpreted to be likely to be incapable of communication. In a second example, the profile used by subscriber B is checked, based on which the attribute is found out, e.g. ringing tone, and the value thereof. Different services may also be combined; a calendar service may also be combined with a presence service, for example. An example is a case wherein the presence of subscriber B is 'a meeting', then the calendar is checked and the calendar information is utilized for instance when informing the caller. A feature of the terminal employed by subscriber B and/or the support of a visited network (or any corresponding network to which subscriber B is attached) for a given communication mode, service and/or property may constitute an attribute. Examples of such services include multimedia messages and video calls.

Figures 2, 3 and 4 describe the operation of a network node (communication system) according to the invention in different embodiments. The assumption in the examples of Figures 2, 3 and 4 is for the sake of clarity that subscriber A makes a call to subscriber B, and that the probable capability of communication is found out by means of the value of one attribute only, the attribute being the ringing tone. Figures 2, 3 and 4 show prior art activities only to a degree required for understanding the invention. For example, the operation associated with presence information authorization or the like and authorization checking is described only as regards the forwarding of updated presence information to the subscribers thereof. Neither is the identity of the subscriber to the functionality according to the invention of any significance, and thus the right of the subscriber to obtain the service according to the invention is not studied. A further assumption in the figures is that the service has been subscribed to, and the transfer of the necessary information is allowed. The functions can be implemented in one network node/server or they may be distributed to several network nodes/servers.

Figure 2 shows the operation of a network node (i.e. connection establishment system) of a first exemplary embodiment of the invention by means of a flow diagram. The initial situation in Figure 2 is that a connection establishment request to subscriber B is received in step 201. Subscriber A calls subscriber B, for example. In step 202, detection is made at the network node that an attribute is associated with the connection establishment, as a result of which the value of the attribute is found out in step 203. For example, the subscriber information of subscriber B shows that subscriber B has a presence service, and the attribute to be found out is the ringing tone, which is found out in the information of subscriber B at the presence server. On the basis of the value of the attribute, in step 204, a conclusion is made as to whether subscriber B is likely to be capable of answering. For example, if the ringing tone is 'mute', a conclusion can be made in the system that subscriber B is likely to be incapable of answering, but would be capable in case of other ringing tones.

If subscriber B is likely to be capable of answering, the connection establishment is continued in step 206 in accordance with prior art, for example.

If subscriber B is likely to be incapable of answering (step 204), in step 205, a voice message is generated for subscriber A, the message being played to him at the same time as in step 206 the connection establishment is preferably continued to subscriber B. The advantage brought forth by the generation of a voice message is that the caller receives information about the state of subscriber B at his terminal irrespective of whether the terminal of subscriber A supports presence service, for example. In addition, subscriber A very easily receives the information and does not have to do anything himself in order to receive the information.

The voice message may be generated either at the network node or the network node may be arranged to request the generation of the voice message from some other network node. In addition to or instead of a voice message, another message can also be generated, a visual message, for example. The message may also utilize for instance a vibrating battery. The invention does in no way restrict the type of message. The message may also be a message specified/stored for instance subscriber A-specifically, subscriber A terminal type-specifically and/or attribute-specifically in advance. Accordingly, the message may be different for different subscribers A and/or it may depend on the reason why subscriber B is likely to be incapable of answering a call or receiving a message. The message may for instance state that subscriber B is outside the coverage area, the terminal of subscriber B does not support the desired communication mode, the information of a roaming subscriber B could include information about the time zone or differences between the services of the operator of the home network and the operator of the visited network, for instance in the switching of multimedia messages. The attribute can also affect the contents of the message. For example, if the attribute is 'at a meeting', and its value is 'true', i.e. subscriber B is at a meeting, the estimated termination time of the meeting can be retrieved from the calendar system, and a message can be generated, stating that 'subscriber B is at present at a meeting, which is estimated to end at time x'. The native country of the subscription of subscriber A can be taken into consideration in the generation of the message, for instance by generating an English-language message for holders of subscriptions that are not Finnish. Correspondingly, when subscriber A is roaming for instance Great Britain, the message to be generated can bypass the standard message of the visited network.

In some other embodiments of the invention, in addition to the generation of the voice message, the connection establishment is not immediately continued, but instructions for continuing the connection establishment are inquired, preferably by a voice message, of subscriber A. For example, one or more of the following can be inquired of subscriber A: does he wish to continue connection establishment to subscriber B, leave a message in the voicemail of subscriber B, listen to the calendar information of subscriber B, receive calendar information as a short message or receive calendar information as a multimedia message. From this on, the continuation is in accordance with the choice of subscriber A. Providing calendar information is preferably subject to subscriber B being able to specify for instance calendar information that is public to everybody and/or subscriber A-specifically public calendar information. As calendar information, the time of becoming available and possibly also the event can be transferred. Alternatively, an instruction associated with the attribute can be specified for continuing the connection establishment.

Let it still be pointed out that the invention does in no way restrict the contents of the messages, but the message and its contents are freely specifiable.

Figures 3 shows a second exemplary embodiment of the invention by means of a flow diagram. In the second embodiment, the system is also responsible for the presence information visible to the subscribers being up to date. This allows the operator to update the presence information visible to other subscribers according to the actual behaviour of subscriber B. This also brings forth the advantage that the presence information of for instance subscriber B that ended up in a shadow zone is updated although he himself is unable to communicate with the system and thus to update his information. In this embodiment, status information can be employed for other purposes than estimating communication capability, for instance a toon in the terminal of subscriber A may change in accordance with the presence information of subscriber B, updated by the system.

The initial situation in Figure 3 is that the telephone of subscriber B rings as a sign of a connection establishment request (step 301). The call establishment system monitors if subscriber B answers (step 302). If subscriber B answers, in step 303 his status is updated as reachable, for example. If he does not answer, in step 304 his status is updated as unreachable. Herein, updating refers to setting the status to correspond to said status in the server maintaining the status information.

When implementing the second embodiment for messages that do not require connection establishment, step 302 may comprise monitoring for instance if the message was delivered to the destination or if a 'read' acknowledgement was received for the message within a given time, and updating the status as described above. Such messages include short messages and multimedia messages, for example.

Some embodiments enable the specification of different conditions that have to be fulfilled in order for the status to be updated. The conditions may be specified by the subscriber himself and/or the operator. The condition may be for instance the following: when the subscriber has not answered a given number of calls, the system changes the presence information. Another example of a condition is that if the short and/or multimedia messages transmitted to subscriber B have not been delivered to the destination for instance during the last half hour, the presence information can be updated. The updating server may also be configured to check if the existing value and the updated value of the status match and to perform the update only if they do not match.

Some embodiments enable the transmission of information, e.g. a message, to subscriber B, the information indicating that a status of his that is visible to other subscribers, i.e. presence information, has been updated although subscriber B's own status has not been updated. For example, if subscriber B failed to answer calls, his status that is visible to others has been updated as 'unreachable' although his own status is still 'reachable'.

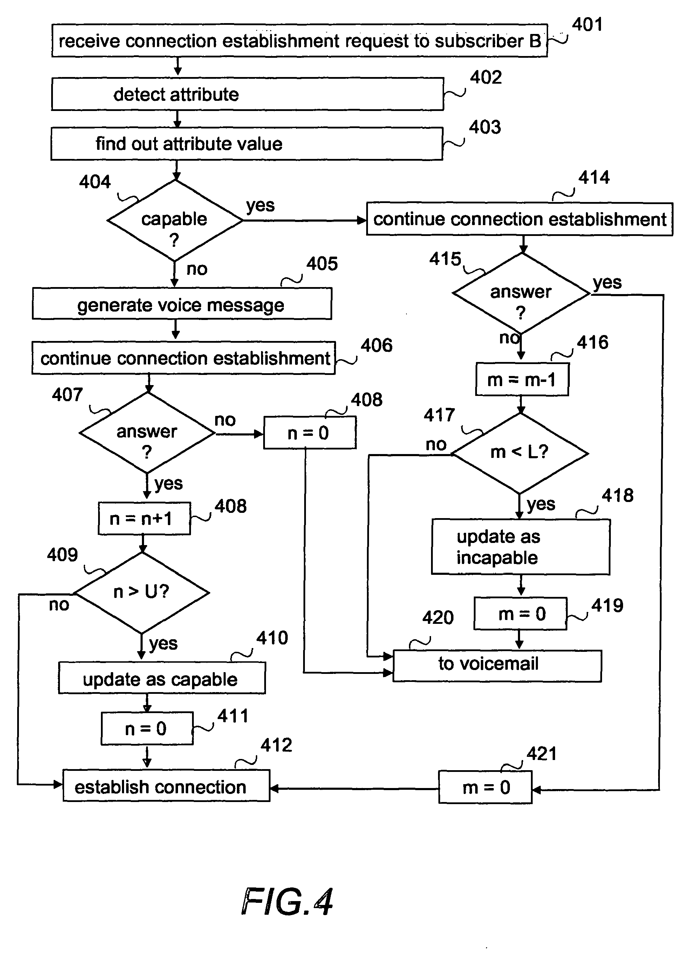

Figure 4 shows, by means of a flow diagram, the operation of a third exemplary embodiment of the invention wherein subscriber A calls subscriber B. The initial situation in Figure 4 is that a connection establishment request to subscriber B is received in step 401. In step 402, detection is made at the network node that an attribute is associated with the connection establishment, as a result of which the value of the attribute is found out in step 403 for instance in the manner explained in association with Figure 2.

If subscriber B is likely to be incapable of answering (step 404), in step 405, a voice message is generated for subscriber A for instance in the same manner as was explained in association with Figure 2. The message is preferably played to subscriber A at the same time as in step 406 the connection establishment is preferably continued to subscriber B in such a manner that the telephone of subscriber B rings as a sign of a connection establishment request. The network node monitors if subscriber B answers (step 407). If subscriber B answers, in step 408 a monitoring number n is updated by incrementing it by one, followed by a comparison thereof with an upper limit value U in step 409. If the monitoring number n exceeds the upper limit value U, in step 410 the value of the attribute is updated such that it indicates that subscriber B is likely to be capable of answering and in step 411 the value of the monitoring number n is set to zero and in step 412 a connection is established between subscriber A and subscriber B.

If the monitoring number does not exceed the upper limit value (step 409), step 412 is directly entered, and a connection is established between subscriber A and subscriber B.

If it is detected in step 407 that subscriber B does not answer, in step 413 the monitoring number n is updated to zero and in step 420 the process continues for instance in accordance with prior art by disconnecting the connection or directing the call to voicemail or for instance by inquiring instructions of subscriber A in the manner described in association with Figure 2.

If subscriber B is likely to be capable of answering (step 404), in step 414 the connection establishment to subscriber B is continued in such a manner that the telephone of subscriber B rings as a sign of a connection establishment request. The network node monitors if subscriber B answers (step 415). If subscriber B does not answer, in step 416 a monitoring number m is updated by decrementing it by one, followed by a comparison thereof with a lower limit value L in step 417. If the monitoring number m is lower than the lower limit value L, in step 418 the value of the attribute is updated such that it indicates that subscriber B is unlikely to be capable of answering and in step 419 the value of the monitoring number m is set to zero and in step 420 the process continues for instance in accordance with prior art for instance by disconnecting the connection or directing the call to voicemail or for instance by inquiring instructions of subscriber A in the manner described in association with Figure 2.

If the monitoring number m is not lower than the lower limit value (step 417), step 420 is entered directly and the process continues from there for instance in the above described manner.

If a detection is made in step 415 indicating that subscriber B answers, in step 421 the value of the monitoring number m is updated to zero and in step 412 a connection is established between subscriber A and subscriber B.

In the third embodiment, monitoring numbers are employed for measuring how many calls a user has answered although he was unlikely to be capable thereof or, on the contrary, did not answer even if he was likely to be capable thereof, and by comparing the monitoring number with a limit value, a decision to change the value of the attribute or not can be made. The embodiment only describes one example of a variable to be monitored and of the manner of monitoring. The invention does in no way restrict the amount of monitoring, and the monitoring can also be omitted. It is neither at all necessary to zero the monitoring number when a subscriber acts in accordance with his probable capability, as in the example of Figure 4. The monitoring number may also be the same.

In some embodiments of the invention, subscriber B and/or the operator may also specify different parameters and their values, which enable the control of for example when the value of an attribute changes automatically, i.e. by the system, or when a separate piece of status information is added to the message. The separate piece of status information may also be added for instance on the basis of attempted calls, caller, caller-specific attempted calls, etc.

The steps described in Figures 2, 3 and 4 are not in an absolute chronological order and they can be executed in another order than the one given or simultaneously. Other functions may be executed in between the steps described or simultaneously therewith. Part of the steps described in the figures can also be omitted. Part of the steps described may also be replaced by some other step, as was stated above. The steps may also be modified according to how and in which network nodes the different functionalities are placed, what the attributes and the set of conditions associated therewith are, which rules are used to generate messages etc.

The manner in which the above described operations are implemented and how and from where they receive the necessary values and attribute specifications are not significant to the invention. Other details of data transmission, such as who is entitled to obtain information and how this is checked, are not either significant to the invention.

Although the invention was described above by using mainly an example of a call from subscriber A to subscriber B, it is evident to a person skilled in the art that the invention is applicable for use in association with any type of communication. For example, in the delivery of different messages not involving the establishment of an actual connection between the subscribers, attributes may be specified according to the probability of the receiver of noticing a message transmitted to him and/or the probability of getting the message delivered to the receiver. Subscriber B can be specified as capable of communication also if the delivery of the message to subscriber B succeeds within a given time limit. If the time limit expires and the message still waits to be delivered to subscriber B, subscriber B can be updated as incapable of communication and optionally transmit a message to the transmitter of the message stating for instance that the message continues to wait for delivery, since no connection can be made to subscriber B. On the basis of the values of these attributes, the transmitter of the message can be transmitted a message indicating the attribute and its value and/or the reason why the delivery of the message failed or the reason why the message is waiting.

Although the invention was described above under the assumption that subscriber A always receives a message when subscriber B is likely to be incapable of communication, it is evident to a person skilled in the art that for instance conditions relating to subscriber A can be associated with the generation and delivery of the message, such as for instance that the message will be delivered only if subscriber A is not in possession of a terminal supporting a presence service and/or subscriber A has subscribed to a presence service. Subscriber B may also have specified that messages and/or specified information associated therewith can be delivered only to given subscribers A.

Although the invention was described above under the assumption that subscriber B is one person, it is evident to a person skilled in the art how the invention is implemented when subscriber B is a group, i.e. composed of a set of subscribers, which subscriber A attempts to reach by one call or message, for example. If subscriber B is a group, the attribute values are preferably checked for all members of the group, and a message is generated preferably based on a combination of the members of the group. The message may be, for example, that three members of the group are unlikely to be reached.

Although the invention was described above under the assumption that the network node (connection establishment system) identifies the attributes and retrieves the values thereof if need be, even from the terminal settings of subscriber B, the invention can be implemented by placing the functionality according to the invention as described above or part thereof in the terminal of subscriber A.

Other embodiments of the invention may be generated by combining the functionalities or parts of the functionalities of the embodiments described above.

The system implementing the functionality of the present invention and its network nodes and/or sever components comprise, in addition to prior art means, means for implementing the above described individual functions or for implementing different combinations of said functions. More exactly, they comprise means for maintaining the value of at least one specified attribute. Present network nodes, servers, server components and user devices comprise processors and memory that are usable in the functions of the invention. All alterations required for implementing the invention can be achieved by configuring and/or adding, to the devices, applications, data transfer modules and/or routines that are implementable as added or updated software routines, application circuits (ASIC) and/or programmable circuits.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. A method of indicating a subscriber's communication capability in a telecommunication system, **characterized by**
specifying at least one attribute (202, 402) whose value indicates to the system whether or not the subscriber is likely to be capable of communication, and
maintaining a value (303, 304, 410, 418) of the attribute subscriber-specifically.

2. A method as claimed in claim 1, further comprising indicating with the attribute (204, 404) to the system whether or not the subscriber is likely to be capable of communication when the subscriber line is not occupied.

3. A method as claimed in claim 1 or 2, further comprising:
indicating (204, 404) with the attribute whether or not the subscriber is likely to be capable of receiving calls;
checking (203, 403) the value of the attribute in connection with call establishment; and
generating (205, 405) a message to the caller if the value indicates that the called subscriber is unlikely to be capable of receiving the call.

4. A method as claimed in claim 3, further comprising continuing (206, 406) the call establishment irrespective of the value of the attribute.

5. A method as claimed in claim 3, further comprising requesting further instructions from the caller if the value indicates that the called subscriber is unlikely to be capable of receiving the call.

6. A method as claimed in any one of the preceding claims, further comprising:
indicating with the attribute whether or not the subscriber is likely to be capable of detecting an incoming message;
checking the value of the attribute in connection with message delivery; and
generating a message to the sender of the message if the value indicates that the subscriber is unlikely to be capable of detecting the message.

7. A method as claimed in any one of the preceding claims, further comprising updating (303, 304, 410, 418) the value of the attribute to match an action by the subscriber in response to the action by the subscriber being contrary to the value of the attribute.

8. A method as claimed in claim 7, wherein the value of the attribute is updated (303, 304, 410, 418) to match an action by the subscriber in response to the action by the subscriber being contrary to the value of the attribute to a predetermined degree.

9. A method as claimed in any one of the preceding claims, wherein the attribute provides or indicates status information about the subscriber or the attribute relates to subscriber's location information.

10. A method as claimed in any one of the preceding claims, wherein the attribute is an attribute in a presence service, an event type in a calendar, a setting in an active usage profile, a ringing tone, or a message sound.

11. A method as claimed in any one of the preceding claims, further comprising specifying one or more triggers for detecting that the attribute is associated with the communication.

12. A method as claimed in claim 11, wherein the trigger is that the subscriber to whom the communication is targeted is a subscriber to a presence service and/or to a calendar service, and the attribute is an attribute of the corresponding service.

13. A server component for a telecommunication system, **characterized in that** it is configured to execute the method as claimed in any one of claims 1 to 12.

14. A server component as claimed in claim 13, **characterized in that** the server component belongs to a connection establishment system and is configured to retrieve the value of the attribute from a presence server, a calendar server, a location information server, from a terminal the subscriber to whom the communication is targeted to use, and/or from subscriber information maintained in a home location register and/or in a visitor location register.

## Patentansprüche

1. Verfahren zum Kennzeichnen der Kommunikationsfähigkeit eines Teilnehmers in einem Telekommunikationssystem, **gekennzeichnet durch**
Festlegen wenigstens eines Attributes (202, 402) dessen Wert dem System kennzeichnet, ob der Teilnehmer wahrscheinlich zu einer Kommunikation in der Lage ist oder nicht, und
teilnehmerspezifisches Beibehalten eines Wertes (303, 304, 410, 418) des Attributes.

2. Verfahren nach Anspruch 1, weiterhin umfassend das Ausführen einer Kennzeichnung (204, 404) an das System mit Hilfe des Attributes, ob der Teilnehmer wahrscheinlich zu einer Kommunikation in der Lage ist, wenn die Teilnehmerleitung nicht belegt ist, oder nicht

3. Verfahren nach Anspruch 1 oder 2, weiterhin umfassend:
Kennzeichnen (204, 404) mit Hilfe des Attributes, ob der Teilnehmer wahrscheinlich in der Lage ist, Anrufe entgegenzunehmen;
Prüfen (203, 403) des Wertes des Attributes in Verbindung mit der Einrichtung eines Anrufes; und
Erzeugen (205, 405) einer Nachricht an den Anrufer, sofern der Wert kennzeichnet, dass der angerufene Teilnehmer wahrscheinlich nicht in der Lage ist, den Anruf anzunehmen.

4. Verfahren nach Anspruch 3, weiterhin umfassend das Fortführen (206, 406) der Anrufeinrichtung ohne Rücksicht auf den Wert des Attributes.

5. Verfahren nach Anspruch 3, weiterhin umfassend das Anfordern weiterer Anweisungen von dem Anrufer, sofern der Wert kennzeichnet, dass der angerufene Teilnehmer wahrscheinlich nicht in der Lage ist, den Anruf anzunehmen.

6. Verfahren nach einem der vorhergehenden Ansprüche, weiterhin umfassend:
Kennzeichnen mit Hilfe des Attributes, ob der Teilnehmer wahrscheinlich in der Lage ist, eine eintreffende Nachricht zu erfassen;
Prüfen des Wertes des Attributes in Verbindung mit einer Nachrichtenzustellung, und
Erzeugen einer Nachricht an den Sender der Nachricht, sofern der Wert kennzeichnet, dass der Teilnehmer wahrscheinlich nicht in der Lage ist, die Nachricht zu erfassen.

7. Verfahren nach einem der vorhergehenden Ansprüche, weiterhin umfassend das Aktualisieren (303, 304, 410, 418) des Attributwertes, um mit einer Tätigkeit des Teilnehmers in Erwiderung darauf übereinzustimmen, dass die Tätigkeit des Teilnehmers dem Attributwert entgegengesetzt ist.

8. Verfahren nach Anspruch 7, bei dem der Attributwert aktualisiert wird (303, 304, 410, 418), um mit einer Tätigkeit des Teilnehmers in Erwiderung darauf übereinzustimmen, dass die Tätigkeit des Teilnehmers zu dem Attributwert bis zu einem vorbestimmten Grad entgegengesetzt ist.

9. Verfahren nach einem der vorhergehenden Ansprüche, bei dem das Attribut Statusinformationen über den Teilnehmer bereitstellt oder kennzeichnet oder sich das Attribut auf Informationen bezüglich des Ortes des Teilnehmers bezieht.

10. Verfahren nach einem der vorhergehenden Ansprüche, bei dem das Attribut ein Attribut in einem Präsenzdienst, ein Ereignistyp in einem Kalender, eine Einstellung in einem aktiven Benutzerprofil, ein Klingelton oder ein Nachrichtenton ist.

11. Verfahren nach einem der vorhergehenden Ansprüche, weiterhin umfassend das Festlegen wenigstens eines Auslösers zum Erfassen, dass das Attribut der Kommunikation zugeordnet ist.

12. Verfahren nach Anspruch 11, bei dem der Auslöser darin besteht, dass der Teilnehmer, auf den die Kommunikation gerichtet ist, ein Teilnehmer eines Präsenzdienstes und/oder eines Kalenderdienstes ist, und das Attribut ein Attribut des entsprechenden Dienstes ist.

13. Server-Komponente für ein Telekommunikationssystem, **dadurch gekennzeichnet, dass** sie dazu eingerichtet ist, das Verfahren nach einem der Ansprüche 1 bis 12 auszuführen.

14. Server-Komponente nach Anspruch 13, **dadurch gekennzeichnet, dass** die Server-komponente zu einem Verbindungseinrichtungssystem gehört und dazu eingerichtet ist, den Attributwert von einem Präsenz-Server, einem Kalender-Server, einem Ortsinformations-Server, von einem Endgerät, das der Teilnehmer verwendet, auf den die Kommunikation gerichtet ist, und/oder aus Teilnehmerinformationen zurückzuladen, die in einem Heimatortregister und/oder einem Besucherortregister bereitgestellt sind.

## Revendications

1. Procédé d'indication de la capacité de communication d'un abonné dans un système de télécommunication, **caractérisé par** les étapes consistant à :
spécifier au moins un attribut (202, 402) dont la valeur indique au système s'il est oui ou non probable que l'abonné est capable de communiquer ; et
maintenir une valeur (303, 304, 410, 418) de l'attribut spécifique à l'abonné.

2. Procédé selon la revendication 1, comprenant en plus l'étape consistant à :
indiquer au système au moyen de l'attribut (204, 404) s'il est oui ou non probable que l'abonné est capable de communiquer lorsque la ligne de l'abonné n'est pas occupée.

3. Procédé selon la revendication 1 ou la revendication 2, comprenant en plus les étapes consistant à :
indiquer (204, 404) au moyen de l'attribut s'il est oui ou non probable que l'abonné est capable de recevoir des appels ;
vérifier (203, 403) la valeur de l'attribut en liaison avec l'établissement de la communication ; et
générer (205, 405) un message à l'attention du demandeur si la valeur indique qu'il est probable que l'abonné appelé n'est pas capable de recevoir l'appel.

4. Procédé selon la revendication 3, comprenant en plus la poursuite (206, 406) de l'établissement de la communication quelle que soit la valeur de l'attribut.

5. Procédé selon la revendication 3, comprenant en plus la requête d'autres instructions de la part du demandeur si la valeur indique qu'il est probable que l'abonné appelé n'est pas capable de recevoir l'appel.

6. Procédé selon l'une quelconque des revendications précédentes, comprenant en plus les étapes consistant à :
indiquer au moyen de l'attribut s'il est oui ou non probable que l'abonné est capable de détecter un message entrant ;
vérifier la valeur de l'attribut en liaison avec la délivrance du message ; et
générer un message à l'attention de l'émetteur du message si la valeur indique qu'il est probable que l'abonné n'est pas capable de détecter le message.

7. Procédé selon l'une quelconque des revendications précédentes, comprenant en plus l'actualisation (303, 304, 410, 418) de la valeur de l'attribut pour correspondre à une action de l'abonné en réponse au fait que l'action de l'abonné est contraire à la valeur de l'attribut.

8. Procédé selon la revendication 7, dans lequel la valeur de l'attribut est actualisée (303, 304, 410, 418) pour correspondre à une action de l'abonné en réponse au fait que l'action de l'abonné est contraire à la valeur de l'attribut à un degré prédéterminé.

9. Procédé selon l'une quelconque des revendications précédentes, dans lequel l'attribut fournit ou indique une information d'état concernant l'abonné ou l'attribut concerne une information de localisation de l'abonné.

10. Procédé selon l'une quelconque des revendications précédentes, dans lequel l'attribut est un attribut dans un service de présence, un type d'événement dans un agenda, un paramètre dans un profil d'usage actif, une tonalité de retour d'appel ou un son de message.

11. Procédé selon l'une quelconque des revendications précédentes, comprenant en plus la spécification d'un ou plusieurs déclencheurs pour détecter que l'attribut est associé à la communication.

12. Procédé selon la revendication 11, dans lequel le déclencheur est que l'abonné auquel la communication est destinée est un abonné à un service de présence et/ou à un service d'agenda et l'attribut est un attribut du service correspondant.

13. Composant de serveur pour un système de télécommunication, **caractérisé en ce qu'**il est configuré pour exécuter le procédé selon l'une quelconque des revendications 1 à 12.

14. Composant de serveur selon la revendication 13, **caractérisé en ce que** le composant de serveur appartient à un système d'établissement de connexion et **en ce qu'**il est configuré pour récupérer la valeur de l'attribut à partir d'un serveur de présence, un serveur d'agenda, un serveur d'informations de localisation, à partir d'un terminal utilisé par l'abonné auquel la communication est destinée, et/ou à partir d'informations de l'abonné maintenues dans un registre HLR et/ou dans un registre VLR.
